# FASCICULE DE BREVET EUROPEEN

(11) **EP 0 389 323 B1**
(45) Date de publication et mention de la délivrance du brevet: **07.01.1993**
(21) Numéro de dépôt: 90400585.7
(22) Date de dépôt: 02.03.1990
(51) Int. Cl.: C03B 23/03, C03B 27/044

(54) **Installation pour incurver et tremper une feuille de verre**
Vorrichtung zum Biegen und Härten einer Glasscheibe
Apparatus for bending and tempering a glass sheet

(30) Priorité: 22.03.1989 FR 8903760
(43) Date de publication de la demande: 26.09.1990
(73) Titulaire: SELAS S.A., F-92300 Levallois-Perret (FR)
(72) Inventeur: Agius, Michel, F-95640 Santeuil (FR)
(74) Mandataire: Bouju, André

(56) Documents cités:
- EP-A- 0 139 524
- EP-A- 0 154 892
- EP-A- 0 261 611
- WO-A-85/03068
- WO-A-89/01458
- US-A- 3 682 613

## Description

La présente invention concerne une installation pour incurver ou bomber et tremper une feuille de verre.

L'invention vise notamment à réaliser des panneaux en verre bordés par un ou deux pans latéraux formant un angle compris entre quelques degrés et 90° de la partie plane du panneau.

On connaît notamment selon le brevet américain 4 784 681 une installation pour incurver de manière régulière une feuille de verre, adjacente à un four dans lequel cette feuille est chauffée à une température suffisante pour incurver ou bomber régulièrement la feuille. Après chauffage, la feuille est amenée entre des organes de mise en forme de cette feuille.

L'installation comporte à cet effet des moyens pour appliquer les organes précités de part et d'autre de la feuille de verre chauffée pour incurver celle-ci selon le profil désiré.

Une caractéristique essentielle de l'installation décrite dans le brevet américain 4 787 681 réside dans le fait que la feuille de verre est trempée par des jets de gaz qui sont soufflés sur la feuille pendant qu'elle est engagée entre les organes qui l'incurvent. Par ailleurs, ces jets de gaz sont soufflés par des buses qui sont séparées et distinctes des organes de mise en forme de la feuille de verre.

Le principal inconvénient de cette installation connue tient au fait qu'elle ne permet pas de réaliser des panneaux de verre présentant des pans formant un angle important avec la partie plane des panneaux.

Or, il existe pour de tels panneaux une forte demande.

Par ailleurs, du fait que les jets de gaz servant à la trempe soient soufflés dans des zones distinctes de celles sur lesquelles prennent appui les organes de mise en forme de la feuille de verre, diminue l'efficacité et l'uniformité de la trempe.

Le WO-A-8901458 décrit un appareil pour bomber une feuille de verre comprenant un plateau supérieur et un plateau inférieur composé chacun de plusieurs éléments reliés les uns aux autres d'une manière telle que les deux plateaux puissent prendre une forme d'arc de cercle de façon à donner une telle forme arquée à la feuille de verre située entre les deux plateaux.

Ces plateaux ne permettent pas non plus de réaliser des articles en verre présentant une partie centrale sensiblement plane bordée d'un côté ou des deux côtés par un pan formant un angle important par exemple compris entre 30 et 90° avec la partie centrale.

Le document WO-A-8 503 068 décrit un appareil pour bomber une feuille de verre entre deux plateaux composés d'élément de cadre de telle sorte qu'en final la feuille est pressée le long de son bord extérieur. L'appareil inclut un dispositif permettant d'avoir des articles de verre présentant une partie centrale plane bordée par des pans formant un angle important, mais n'intègre aucun système de trempage. La partie pré-caractérisante de la revendication 1 est connue de ce document.

Le but de la présente invention est de remédier aux inconvénients des réalisations connues précitées, en créant une installation permettant à la fois des angles d'incurvation ou de pliage élevés et une trempe intégrée plus uniforme.

L'invention concerne donc une installation pour incurver ou bomber et tremper une feuille de verre comprenant des moyens pour chauffer cette feuille, et des moyens pour amener cette dernière entre des organes de mise en forme de cette feuille. L'une des séries d'organes présente une surface destinée à venir en contact avec l'une des faces de la feuille de verre, dont le profil est prédéterminé et correspond à l'incurvation que l'on veut donner à cette feuille. Cette surface présente une partie sensiblement plane bordée au moins d'un côté par un pan formant un angle avec cette dernière et s'étendant transversalement à la direction de déplacement de la feuille de verre. L'autre série d'organes destinée à venir en contact avec l'autre face de la feuille de verre présente une partie fixe correspondant à la partie centrale sensiblement plane de la surface de l'organe précédant à laquelle est fixée au moins une partie mobile pouvant pivoter autour d'un axe parallèle à la direction de déplacement de la feuille de verre, entre une première position et une seconde position dans laquelle elle forme un angle avec cette autre partie correspondant à l'incurvation que l'on veut donner à la feuille de verre. L'installation comprend en outre des moyens pour appliquer ces organes de part et d'autre de cette feuille et pour incurver celle-ci, et des moyens pour envoyer des jets de gaz sur la feuille pour tremper celle-ci. Selon l'invention, les organes sont constitués de blocs traversés par des canaux perpendiculaires à leur surface destinée à venir en contact avec la feuille de verre. Ces canaux sont reliés à une source de gaz destiné à la trempe de la feuille de verre. Les moyens pour envoyer des jets de gaz sur la feuille pour tremper celle-ci comprennent des moyens pour commander l'écartement de organes après application de ceux-ci sur la feuille de verre et incurvation de celle-ci et pour commander l'arrivée des jets de gaz de trempe seulement après cette opération.

L'installation permet ainsi, grâce à la partie mobile montée pivotante de l'une des séries d'organes, de plier un bord de la feuille de verre suivant un angle qui peut atteindre 90°, et grâce au fait que le gaz de trempe, contrairement à l'enseignement du document US-A-4 784 681, ne soit soufflé sur la feuille de verre qu'après écartement de celle-ci des organes de mise en forme, elle permet de réaliser une trempe uniforme y compris dans la zone du verre qui a été en contact avec les organes précités.

D'autres particularités et avantages de l'invention apparaîtront encore dans la description ci-après.

Aux dessins annexés donnés à titre d'exemples non limitatifs :
- la figure 1 est une vue schématique de l'installation conforme à l'invention, perpendiculairement à la direction de déplacement de la feuille de verre,
- la figure 2 est une vue en coupe, à plus grande échelle selon le plan II-II de la figure 1,
- les figures 3, 4, 5, 6 montrent différentes vues schématiques de l'installation correspondant aux étapes successives de fonctionnement de celle-ci,
- la figure 7 est un schéma concernant une variante de l'installation en position de pressage de la feuille de verre,
- la figure 8 est un schéma analogue à la figure 7 en position de trempe de la feuille de verre.

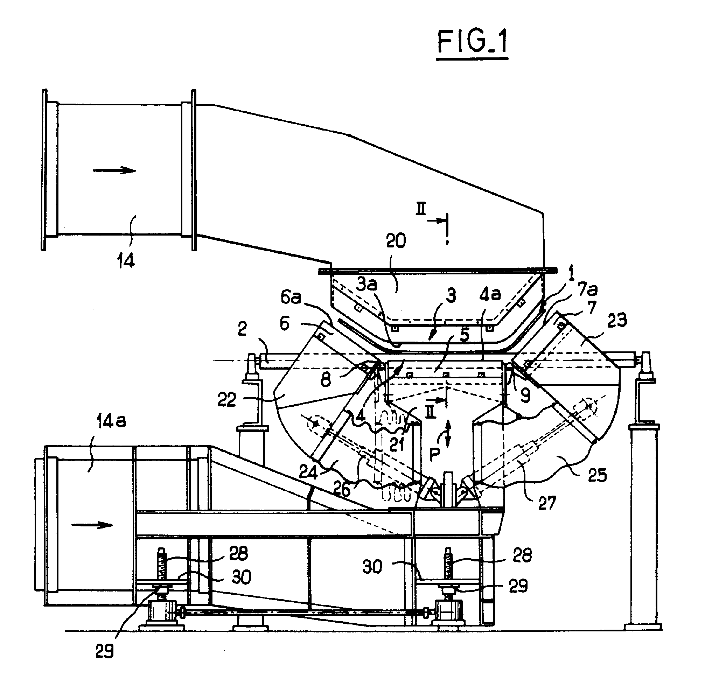

L'installation selon la figure 1 pour incurver et tremper la feuille de verre 1 fait suite à un four où cette dernière est chauffée à une température suffisante pour pouvoir incurver cette feuille.

Après chauffage de cette feuille 1, celle-ci est amenée vers l'installation selon la présente invention au moyen d'un convoyeur à rouleaux 2.

L'installation comprend de façon générale des organes de mise en forme de la feuille 1, des moyens pour appliquer ces organes de part et d'autre de cette feuille 1 et pour incurver celle-ci et des moyens pour envoyer des jets de gaz sur la feuille pour tremper celle-ci.

Conformément à l'invention, l'une 3 des séries d'organes présente une surface 3a destinée à venir en contact avec l'une des faces de la feuille de verre 1, dont le profil correspond à l'incurvation que l'on veut donner à cette feuille. Cette surface 3a s'étendant transversalement à la direction (qui est perpendiculaire au plan de la figure 1) de déplacement de la feuille de verre.

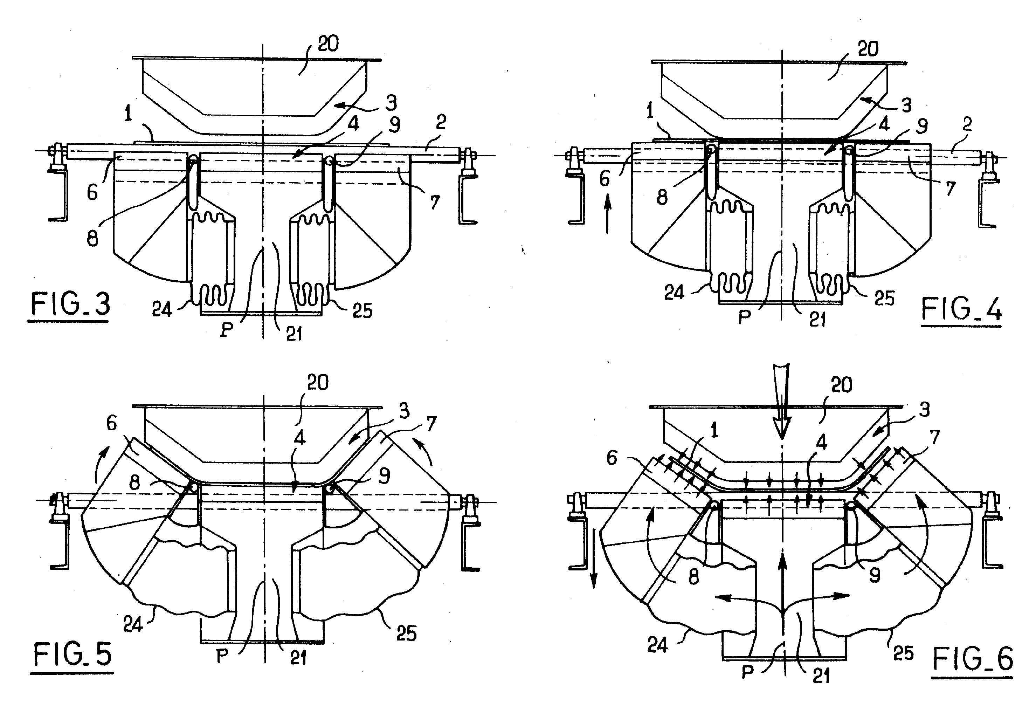

L'autre série d'organes 4 destinée à venir en contact avec l'autre face de la feuille de verre 1 présente une partie fixe 5 à laquelle sont fixées de chaque côté deux parties mobiles 6, 7 pouvant pivoter autour d'un axe 8, 9 parallèle à la direction de déplacement de la feuille de verre 1 entre une première position (voir figures 3 et 4) et une seconde position dans laquelle (voir figures 5 et 6) elles forment un angle a avec cette autre partie 5, correspondant à l'incurvation que l'on veut donner à la feuille de verre 1.

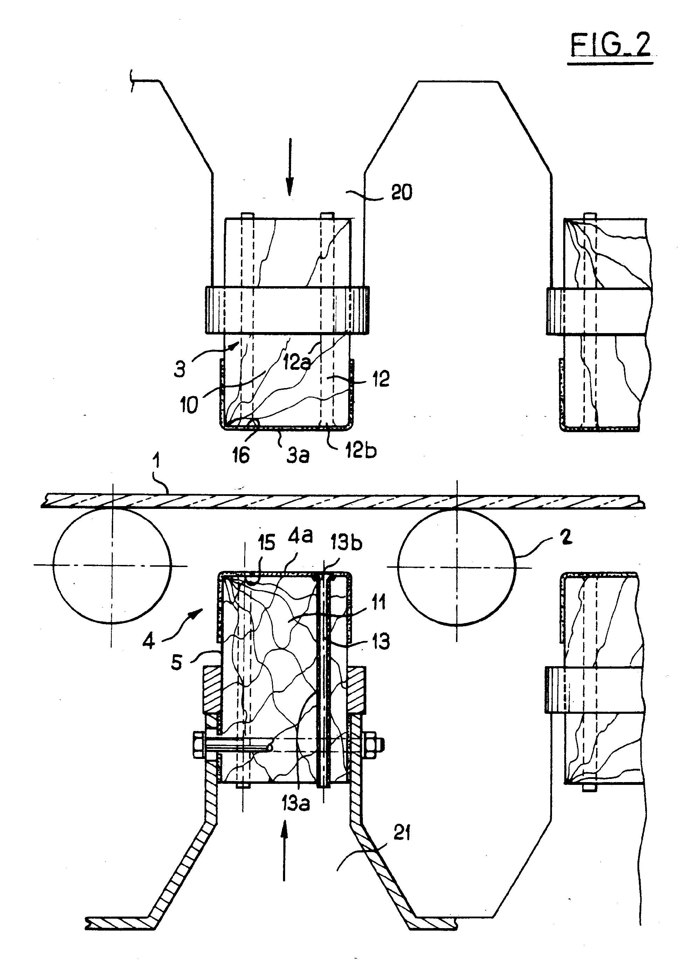

On voit sur la figure 2 que les organes 3 et 4 ainsi que les organes 6 et 7 sont constitués de blocs 10, 11 traversés par des canaux 12, 13 perpendiculaires à leur surface 3a, 4a, 6a, 7a destinée à venir en contact avec la feuille de verre 1. Ces canaux 12, 13 sont reliés à une source 14, 14a de gaz tel que de l'air (voir figure 1) destiné à la trempe de la feuille de verre 1.

Les blocs précités 10, 11 sont en bois de préférence en contreplaqué, ce matériau étant léger et conservant intactes ses propriétés à haute température.

On voit également sur la figure 2 que la surface desdits blocs 10, 11 destinée à venir en contact avec la feuille de verre 1 est recouverte d'un tissu de verre 15, 16 pour éviter d'altérer la surface de la feuille de verre.

Par ailleurs, les canaux 12, 13 sont constitués par des tubes métalliques 12a, 13a se terminant à la surface des blocs 10, 11 par des parties tronconiques 12b, 13b.

Dans la réalisation représentée sur les figures 1 à 6, la première série d'organes 3 située au-dessus de la feuille de verre 1 est fixe, tandis que la seconde série d'organes 4, 5, 6, 7 située an-dessous de cette feuille 1 est déplaçable dans un plan vertical P entre une position (voir figures 3 et 4) espacée de la feuille de verre 1 située entre les deux séries d'organes et une position (voir figure 5) dans laquelle cette seconde série d'organes 4, 5, 6, 7 soulève la feuille de verre 1 et applique celle-ci contre la première série d'organes 3.

L'installation selon l'invention comprend d'autre part des moyens pour commander l'écartement desdits organes 4, 5, 6, 7 après application de ceux-ci sur la feuille de verre 1 et incurvation de celle-ci et pour commander l'arrivée des jets de gaz de trempe par les canaux 12, 13 seulement après cette opération (voir les flèches figurant les jets d'air sur la figure 6).

D'autre part les rouleaux 2 maintiennent la feuille de verre 1 entre les surfaces d'appui desdits organes 3, 4, 5, 6, 7 lorsque ceux-ci sont au repos (voir figures 3 et 6).

Ces rouleaux du fait de leur forme rectiligne ne risquent à aucun moment de marquer la surface du verre, contrairement au cas du dispositif décrit dans le WO-A-8901458 dans lequel la feuille de verre est en contact avec des galets. De tels galets sont d'ailleurs indispensables pour obtenir un pliage en arc de cercle de la feuille de verre.

De plus, les figures 1 et 3, 4, 5, 6 font apparaître que les blocs traversés par des canaux 12, 13 sont adjacents à des compartiments 20, 21, 22, 23 d'arrivée du gaz de trempe et faisant partie des organes 3, 4, 6, 7.

Le compartiment 21 de la partie intermédiaire 5 de l'organe mobile 4 est relié au compartiment 22, 23 de chacune des parties pivotantes 6, 7 par un soufflet 24, 25.

On voit d'autre part sur la figure 1, que les moyens pour commander le pivotement des parties pivotantes 6, 7 comprennent des vérins pneumatiques ou électriques 26, 27.

Par ailleurs, les moyens pour commander le déplacement vertical de la série d'organes 4, 5, 6, 7 comprennent des tiges filetées 28 verticales entraînées en rotation par un moteur à vitesse variable et vissées dans un écrou 29 solidaire du châssis 30 qui supporte les organes précités.

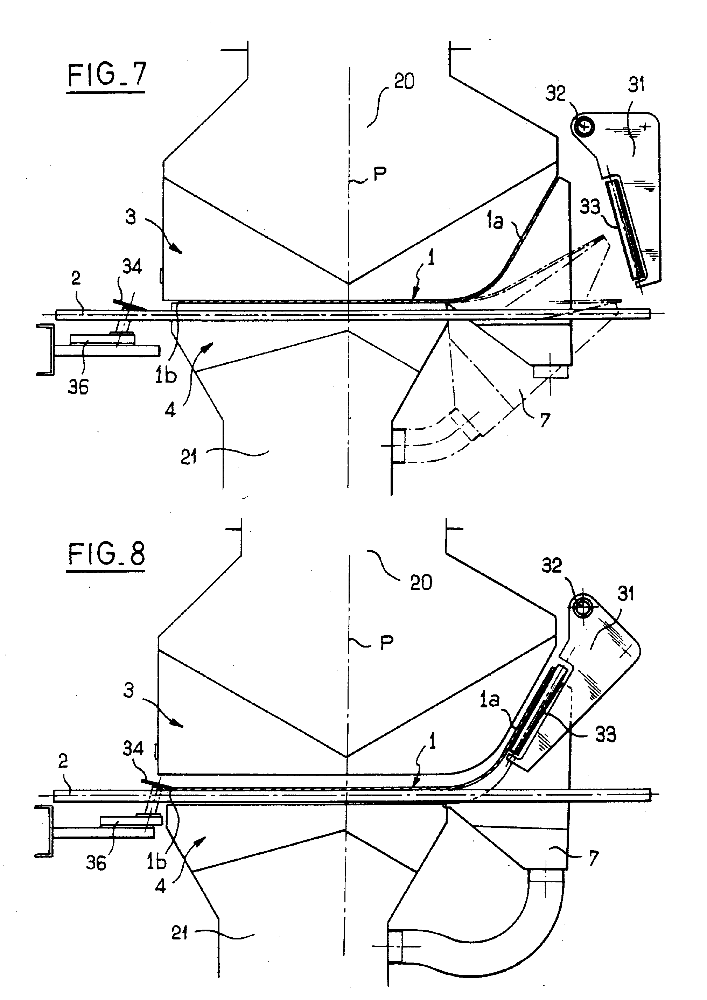

Dans la variante de réalisation représentée sur les figures 7 et 8, l'installation comprend une série d'organes mobiles 31 pouvant prendre appui sous la partie incurvée 1a de la feuille de verre 1, lorsque celle-ci, après avoir été mise en forme, subit la trempe par les jets de gaz.

Ces organes 31 sont montés pivotant sur un axe 32 situé sur le côté de l'installation et parallèle à la direction de déplacement de la feuille de verre 1. Ces organes 31 comportent un rouleau motorisé 33 monté en rotation perpendiculairement au bord longitudinal de la feuille de verre 1. Ces organes peuvent pivoter entre une position écartée (voir figure 7) de la feuille de verre 1 et une position dans laquelle (voir figure 8) le rouleau 33 prend appui sous la surface de cette feuille 1 pour soutenir la partie incurvée de celle-ci pendant l'opération de trempe illustrée à la figure 7, dans laquelle les organes d'appui sont écartés de cette feuille de verre.

Dans l'exemple illustré par les figures 7 et 8, seul l'un des côtés de la feuille de verre 1 est incurvé.

Dans la position de trempe, le bord 1b de la feuille 1 opposé à la partie incurvée 1a est retenu par une molette 34 qui vient s'appuyer contre celui-ci. Cette molette 34 est solidaire d'une plaquette 35 montée en translation sur un support horizontal fixe 36, entre une position rétractée (voir figure 7) et une position d'appui (voir figure 8).

On va maintenant expliquer en référence aux figures 3, 4, 5, 6 le fonctionnement de l'installation conforme à l'invention.

La figure 3 montre l'arrivée de la feuille de verre 1 chaude et plane reposant sur les rouleaux 2 entre les organes de mise en forme 3, 4, 6, 7 écartés de cette feuille 1. Dans les figures annexées, les organes pivotant 6, 7 ont leur surface supérieure située dans le prolongement de celle de l'organe intermédiaire 4. Cependant, cette disposition n'est pas essentielle. En effet, il peut être préférable qu'au repos les organes pivotants 6, 7 soient situés sous le plan de l'organe intermédiaire 4.

Dans la seconde étape illustrée par la figure 4, l'ensemble des organes 4, 6, 7 est déplacé vers le haut, pour soulever la feuille de verre 1 des rouleaux 2 et pour l'appliquer contre l'organe supérieur fixe 3.

Dans la troisième étape montrée à la figure 5, les deux organes latéraux 6, 7 pivotent et viennent appliquer les deux pans latéraux de la feuille de verre contre les surfaces latérales obliques de l'organe fixe supérieur 3. On comprend que grâce à ces organes pivotant 6, 7 il est possible de replier les pans latéraux de la feuille de verre suivant un angle a quelconque compris entre 0 et 90°. De plus, ces pans latéraux peuvent avoir une courbure quelconque.

Dans la quatrième étape illustrée par la figure 6, l'ensemble des organes 4, 6, 7 est abaissé verticalement, l'angle de pivotement des organes 6, 7 étant maintenu. La feuille de verre formée 1 est écartée de l'organe supérieur fixe 3 et repose sur les rouleaux 2.

On envoie alors l'air par les canaux formés dans les blocs en bois constituant les organes 3, 4, 6, 7 pour tremper la feuille de verre et la figer dans sa forme incurvée ou bombée.

Pour éviter tout risque de déformation des pans latéraux repliés de la feuille de verre, on met avantageusement en oeuvre, les supports latéraux 31 à rouleaux 33 représentés sur les figures 7 et 8.

Du fait que lors de la trempe, la feuille de verre 1 est espacée des organes 3, 4, 6, 7, la trempe réalisée par les jets d'air dirigés perpendiculairement aux deux surfaces de la feuille, est à la fois efficace et uniforme.

Bien entendu, l'invention n'est pas limitée aux exemples de réalisation que l'on vient de décrire et on peut apporter à ceux-ci de nombreuses modifications sans sortir du cadre de l'invention.

Ainsi, l'organe 4 inférieur de mise en forme pourrait être fixe et l'organe 3 supérieur mobile.

La commande du pivotement des organes 6, 7 pourrait être assurée par d'autres moyens que des vérins.

De même, le déplacement vertical de l'organe 4 pourrait être assuré par d'autres moyens que des tiges filetées vissées dans des écrous.

## Revendications

1. Installation pour incurver ou bomber et tremper une feuille de verre (1) comprenant des moyens pour chauffer cette feuille, des moyens pour amener cette dernière entre des organes (3, 4, 6, 7) de mise en forme de cette feuille, l'une (3) des séries d'organes présentant une surface (3a) destinée à venir en contact avec l'une des faces de la feuille de verre (1), dont le profil est prédéterminé et correspond à l'incurvation que l'on veut donner à cette feuille, cette surface (3a) présentant une partie sensiblement plane bordée au moins d'un côté par un pan formant un angle (a) avec cette dernière, et s'étendant transversalement à la direction de déplacement de la feuille de verre, l'autre série d'organes (4, 6, 7) destinée à venir en contact avec l'autre face de la feuille de verre présentant une partie fixe (5), correspondant à la partie centrale sensiblement plane de la surface (3a) de l'organe précédent (3), à laquelle est fixée au moins une partie mobile (6 ou 7) pouvant pivoter autour d'un axe (8, 9) parallèle à la direction de déplacement de la feuille de verre (1), entre une première position et une seconde position dans laquelle elle forme un angle (a) avec cette autre partie (5) correspondant à l'incurvation que l'on veut donner à la feuille de verre, des moyens pour appliquer ces organes de part et d'autre de cette feuille et pour incurver celle-ci, et des moyens pour envoyer des jets de gaz sur la feuille pour tremper celle-ci, caractérisée en ce que lesdits organes (3, 4, 6, 7) sont constitués de blocs (10, 11) traversés par des canaux (12, 13) perpendiculaires à leur surface destinée à venir en contact avec la feuille de verre (1), ces canaux (12, 13) étant reliés à une source (14, 14a) de gaz destiné à la trempe de la feuille de verre, et que lesdits moyens pour envoyer des jets de gaz sur la feuille pour tremper celle-ci comprennent des moyens pour commander l'écartement desdits organes (3, 4, 6, 7) après application de ceux-ci sur la feuille de verre et incurvation de celle-ci et pour commander l'arrivée des jets de gaz de trempe seulement après cette opération.

2. Installation conforme à la revendication 1, caractérisée en ce que lesdits blocs (10, 11) sont en bois.

3. Installation conforme à l'une des revendications 1 ou 2, caractérisée en ce que la surface (3a, 4a, 6a, 7a) desdits blocs destinée à venir en contact avec la feuille de verre (1) est recouverte d'un tissu de verre (15, 16).

4. Installation conforme à l'une des revendications 1 à 3, caractérisée en ce que ladite autre série d'organes présente une partie fixe (5) à laquelle sont fixées de chaque côté de façon pivotante deux parties mobiles (6, 7) entre lesdites première et seconde positions.

5. Installation conforme à l'une des revendications 1 à 4, caractérisée en ce que la première série d'organes (3) située au-dessus de la feuille de verre (1) est fixe, tandis que la seconde série d'organes (4, 6, 7) située en dessous de cette feuille (1) est déplaçable dans un plan vertical (P) entre une position espacée de la feuille de verre (1) située entre les deux séries d'organes et une position dans laquelle cette seconde série d'organes soulève la feuille de verre et applique celle-ci contre la première série d'organes (3).

6. Installation conforme à l'une des revendications 1 à 5, caractérisée en ce que la feuille de verre (1) est supportée par des rouleaux (2), et que lesdits rouleaux (2) maintiennent la feuille de verre (1) entre les deux surfaces d'appui (3a, 4a, 6a, 7a) desdits organes lorsque ceux-ci sont au repos.

7. Installation conforme à l'une des revendications 1 à 6, caractérisée en ce que les blocs (10, 11) traversés par des canaux (12, 13) sont adjacents à des compartiments (20, 21, 22, 23) d'arrivée du gaz de trempe et faisant partie desdits organes, le compartiment (21) de la partie intermédiaire (4) de l'organe mobile étant relié au compartiment (22, 23) de chacune des parties pivotantes (6, 7) par un soufflet (24, 25).

8. Installation conforme à l'une des revendications 1 à 7, caractérisée en ce que les moyens pour commander le pivotement desdites parties pivotantes (6, 7) comprennent des vérins (26, 27).

9. Installation conforme à l'une des revendications 1 à 8, caractérisée en ce que les moyens pour commander le déplacement vertical de l'une (4, 6, 7) des séries d'organes comprennent des tiges filetées (28) entraînées en rotation, vissées dans un écrou (29) solidaire desdits organes.

10. Installation conforme à l'une des revendications 1 à 10, caractérisée en ce qu'elle comprend un organe mobile (31) pouvant prendre appui sous la partie incurvée (la) de la feuille de verre (1), lorsque celle-ci, après avoir été mise en forme, subit la trempe par les jets de gaz.

11. Installation conforme à la revendication 10, caractérisée en ce que lesdits organes comprennent des organes (31) montés pivotant sur le côté de l'installation et comportant un rouleau (33) monté en rotation perpendiculairement au bord longitudinal de la feuille de verre (1), ces organes (31) pouvant pivoter entre une position écartée de la feuille de verre (1) et une position dans laquelle le rouleau (33) prend appui sous la surface de la partie incurvée (la) de cette feuille.

## Patentansprüche

1. Vorrichtung zum Biegen oder Ausbauchen und zum Härten einer Glasscheibe (1), mit Mitteln zum Erwärmen dieser Scheibe, Mitteln zum Transportieren dieser Scheibe zwischen der Formgebung derselben dienenden Elementen (3, 4, 6, 7), wobei eine (3) dieser Reihen von Elementen eine für die Berührung mit einer der Seiten der Glasscheibe (1) bestimmte Oberfläche (3a) aufweist, deren Profil vorgegeben ist und der Biegung, die dieser Scheibe verliehen werden soll, entspricht, wobei diese Oberfläche (3a) einen im wesentlichen ebenen Abschnitt aufweist, der an wenigstens einer Seite von einer mit dieser letzteren einen Winkel (a) bildenden und sich quer zur Verschiebungsrichtung der Glasscheibe erstreckenden Fläche begrenzt wird, und wobei die andere Reihe von Elementen (4, 6, 7), die für die Berührung mit der anderen Seite der Glasscheibe bestimmt ist, einen dem im wesentlichen ebenen, mittigen Abschnitt der Oberfläche (3a) des vorangehenden Elements (3) entsprechenden festen Abschnitt (5) aufweist, an dem wenigstens ein beweglicher Abschnitt (6 oder 7) befestigt ist, der um eine zur Verschiebungsrichtung der Glasscheibe (1) parallele Achse (8, 9) zwischen einer ersten Position und einer zweiten Position, in der er mit diesem anderen Abschnitt (5) einen Winkel bildet, der der Biegung, die der Glasscheibe verliehen werden soll, entspricht, geschwenkt werden kann, Mitteln zum Anlegen dieser Elemente auf beide Seiten dieser Scheibe und zum Biegen derselben und Mitteln zum Leiten von Gasstrahlen auf die Scheibe, um dieselbe zu härten, dadurch gekennzeichnet, daß die Elemente (3, 4, 6, 7) von Blöcken (10, 11) gebildet werden, die von zu ihrer für die Berührung mit der Glasscheibe (1) bestimmten Oberfläche senkrechten Kanälen (12, 13) durchsetzt werden, wobei diese Kanäle (12, 13) mit einer Quelle (14, 14a) für ein zur Härtung der Glasscheibe bestimmtes Gas verbunden sind, und daß die Mittel zum Leiten von Gasstrahlen auf die Scheibe zu deren Härtung Mittel zum Steuern des Entfernens der Elemente (3, 4, 6, 7) nach deren Anlegen an die Glasscheibe und deren Biegen und zum Steuern der Ankunft der der Härtung dienenden Gasstrahlen nur noch diesen Vorgang enthalten.

2. Vorrichtung gemäß Anspruch 1, dadurch gekennzeichnet, daß die Blöcke (10, 11) aus Holz sind.

3. Vorrichtung gemäß der Ansprüche 1 oder 2, dadurch gekennzeichnet, daß die für die Berührung der Glasscheibe (1) bestimmte Oberfläche (3a, 4a, 6a, 7a) der Blöcke mit einem Glasgewebe (15, 16) überzogen sind.

4. Vorrichtung gemäß einem der Ansprüche 1 bis 3, dadurch gekennzeichnet, daß die andere Reihe von Elementen einen festen Abschnitt (5) aufweist, an dessen jeweiligen Seiten zwei zwischen der ersten und der zweiten Position bewegliche Abschnitte (6, 7) schwenkbar befestigt sind.

5. Vorrichtung gemäß einem der Ansprüche 1 bis 4, dadurch gekennzeichnet, daß die oberhalb der Glasscheibe (1) angeordnete erste Reihe von Elementen (3) unbeweglich ist, während die unterhalb dieser Scheibe (1) angeordnete zweite Reihe von Elementen (4, 6, 7) in einer vertikalen Ebene (P) zwischen einer Position, die sich von der zwischen den zwei Reihen von Elementen angeordneten Glasscheibe (1) in einem Abstand befindet, und einer Position, in der diese zweite Reihe von Elementen die Glasscheibe hochhebt und dieselbe gegen die erste Reihe von Elementen (3) drückt, verschiebbar ist.

6. Vorrichtung gemäß einem der Ansprüche 1 bis 5, dadurch gekennzeichnet, daß die Glasscheibe (1) auf Rollen (2) unterstützt wird, und daß die Rollen (2) die Glasscheibe (1) zwischen den zwei Auflageoberflächen (3a, 4a, 6a, 7a) der Elemente halten, wenn sich diese in Ruhestellung befinden.

7. Vorrichtung gemäß einem der Ansprüche 2 bis 6, dadurch gekennzeichnet, daß die von Kanälen (12, 13) durchsetzten Blökke (10, 11) an Härtungsgas-Zufuhrräume (20, 21, 22, 23) angrenzen und einen Teil der Elemente bilden, wobei der Raum (21) der Mittelabschnittes (4) des beweglichen Elementes mit dem Raum (22, 23) eines jeden schwenkbaren Abschnittes (6, 7) mittels eines Blasebalgs (24, 25) verbunden ist.

8. Vorrichtung gemäß einem der Ansprüche 1 bis 7, dadurch gekennzeichnet, daß die Mittel zum Steuern der Schwenkbewegung der schwenkbaren Abschnitte (6, 7) Hubzylinder (26, 27) umfassen.

9. Vorrichtung gemäß einem der Ansprüche 1 bis 8, dadurch gekennzeichnet, daß die Mittel zum Steuern der vertikalen Verschiebung einer (4, 6, 7) der Reihen von Elementen mit Gewinden versehene Stifte (28) umfassen, die in Drehrichtung angetrieben werden und in eine einteilig mit den Elementen ausgebildete Mutter (29) geschraubt sind.

10. Vorrichtung gemäß einem der Ansprüche 1 bis 9, dadurch gekennzeichnet, daß sie ein bewegliches Element (31) umfaßt, das sich unter dem gebogenen Abschnitt (1a) der Glasscheibe (1) abstützen kann, wenn diese, nachdem sie geformt worden ist, durch die Gasstrahlen gehärtet wird.

11. Vorrichtung gemäß Anspruch 10, dadurch gekennzeichnet, daß die Elemente Elemente (31) umfassen, die an der Seite der Vorrichtung schwenkbar angebracht sind und eine Rolle (33) enthalten, die zur Längskante des Glasscheibe (1) senkrecht drehbar angebracht ist, wobei diese Elemente (31) zwischen einer Position, die sich von der Glasscheibe (1) in einem Abstand befindet, und einer Position, in der sich die Rolle (33) an der Oberfläche des gebogenen Abschnittes (1a) dieser Scheibe von unten abstützt, geschwenkt werden können.

## Claims

1. An installation for curving or bending to convex form and tempering a glass sheet (1) comprising means for heating said sheet, means for bringing said sheet into position between elements (3, 4, 6, 7) which serve to shape said sheet, one (3) of the series of elements having a surface (3a) which is intended to come into contact with one of the faces of the glass sheet (1) and which has a predetermined profile corresponding to the curvature to be given to said sheet, said surface (3a) having a substantially flat portion bordered on at least one side by a section which is inclined at an angle (a) with respect to said flat portion and extends transversely to the direction of displacement of the glass, the other series of elements (4, 6, 7) which is intended to come into contact with the other face of the glass sheet having stationary portion (5) corresponding to the substantially flat central portion of the surface (3a) of the said element (3), at least one movable portion (6 or 7) being attached to said stationary portion and capable of pivoting about an axis (8, 9) which is parallel to the direction of displacement of the glass sheet (1), between a first position and a second position in which said movable portion is inclined at an angle (a) with respect to said other portion (5) corresponding to the curvature to be given to the glass sheet, means for applying said elements on each side of said sheet and for curving this latter and means for applying jets of gas onto the sheet in order to temper this latter, characterized in that said elements (3, 4, 6, 7) are constituted by blocks (10, 11) having through-ducts (12, 13) perpendicular to the surface of said blocks which is intended to come into contact with the glass sheet (1), said ducts (12, 13) being connected to a source (14, 14a) of gas which has the function of tempering the glass sheet, and in that said means for applying jets of gas to the sheet to temper it comprise means for initiating the outward displacement of said elements (3, 4, 6, 7) after application of said elements on the glass sheet and inward bending of said sheet and for initiating the supply of the tempering gas jets only on completion of this operation.

2. An installation according to claim 1, characterized in that said blocks (10, 11) are of wood.

3. An installation according to claim 1 or 2, characterized in that the surface (3a, 4a, 6a, 7a) of said blocks which is intended to come into contact with the glass sheet (1) is covered with a glass fabric (15, 16).

4. An installation according to one of claims 1 to 3, characterized in that the aforementioned other series of elements has a stationary portion (5) to which are pivotally attached on each side two portions (6, 7) which are movable between said first and second positions.

5. An installation according to one of claims 1 to 4, characterized in that the first series of elements (3) located the glass sheet (1) is stationary whilst the second serie of elements (4, 6, 7) located beneath said sheet (1) is displaceable in a vertical plane (P) between a position in spaced relation to the glass sheet (1) located between to two series of elements and a position in which said second series of elements lifts the glass sheet applies this latter against the first series of elements (3).

6. An installation according to one of claims 1 to 5, characterized in that the glass sheet (1) is supported by rollers (2), and said rollers (2) maintain the glass sheet (1) between the two bearing surfaces (3a, 4a, 6a, 7a) of said elements when these latter are at rest.

7. An installation according to one of claims 1 to 6, characterized in that the blocks (10, 11) provided with through-ducts (12, 13) are adjacent to compartments (20, 21, 22, 23) which serve to admit the tempering gas and form part of said elements, the compartment (21) of the intermediate portion (4) of the movable element being connected to the compartment (22, 23) of each of the pivoting portions (6, 7) by means of a bellows seal (24, 25).

8. An installation according to one of claims 1 to 7, characterized in that the means for controlling the pivotal displacement of said pivoting portions (6, 7) comprise jacks (26, 27).

9. An installation to one of claims 1 to 8, characterized in that the means for controlling the vertical displacement of one (4, 6, 7) of the series of elements comprise rotatably driven threaded rods (28) screwed into a nut (29) which is rigidly fixed to said elements.

10. An installation according to one of claims 1 to 10, characterized in that said installation comprises a movable member (31) which is capable of bearing beneath the inwardly bent portion (1a) of the glass sheet (1) when said sheet is subjected to tempering by the gas jets after the shaping operation.

11. An installation according to claim 10, characterized in that the elements aforesaid are provided with members (31) pivotally mounted on one side of the installation and comprising a roller (33) rotatably mounted at right angles to the longitudinal edge of the glass sheet (1), said members (31) being capable of pivotal displacement between a withdrawn position with respect to the glass sheet (1) and a position in which the roller (33) is applied beneath the surface of the inwardly bent portion (1a) of said sheet.
